# FASCICULE DE BREVET EUROPEEN

(11) **EP 3 023 850 B1**
(45) Date de publication et mention de la délivrance du brevet: **28.02.2018**
(21) Numéro de dépôt: 15194853.6
(22) Date de dépôt: 17.11.2015
(51) Int. Cl.: G05B 19/406, G05B 9/02, B25J 9/16, B25J 19/06

(54) **PROCÉDÉ DE DÉCONNEXION D'UN BOÎTIER DE COMMANDE MANUELLE D'UN ROBOT MULTI-AXES ET ROBOT POUR LA MISE EN OEUVRE D'UN TEL PROCÉDÉ**
VERFAHREN ZUM TRENNEN EINES MANUELLEN BEDIENTEILS EINES MULTIACHS-ROBOTERS UND ROBOTER ZUR UMSETZUNG EINES SOLCHEN VERFAHRENS
PROCESS FOR DECONNECTING A MANUAL CONTROL UNIT OF A MULTIAXIS ROBOT AND ROBOT FOR THE IMPLEMENTATION OF SUCH A PROCESS

(30) Priorité: 18.11.2014 FR 1461134
(43) Date de publication de la demande: 25.05.2016
(73) Titulaire: STAUBLI FAVERGES, 74210 Faverges (FR)
(72) Inventeur: GARDE, Louis, 74000 ANNECY (FR)
(74) Mandataire: Lavoix

(56) Documents cités:
- EP-A1- 1 898 280
- DE-A1- 4 315 991

## Description

La présente invention concerne un procédé de déconnexion d'un boîtier de commande manuelle d'un robot multi-axes, ainsi qu'un robot pour la mise en oeuvre d'un tel procédé.

Il est connu d'équiper un dispositif de contrôle d'un bras de robot multi-axes avec un boîtier de commande manuelle qui permet à un opérateur de transmettre des ordres de commande au robot et de recevoir des informations relatives au fonctionnement du robot, comme par exemple des positions de parties mobiles du bras de robot. Le boîtier de commande manuelle permet de sélectionner un mode de fonctionnement manuel du robot, pour déplacer manuellement une partie mobile du bras de robot, par exemple lors d'une phase d'apprentissage de trajectoires, pour une opération de maintenance ou, suite à un arrêt d'urgence, pour repositionner le bras de robot dans une position adéquate.

Le boîtier de commande manuelle dispose généralement d'un bouton d'arrêt d'urgence et d'un contacteur homme-mort désactivé par défaut, qui inclut un bouton de commande qu'il est nécessaire d'activer manuellement durant l'utilisation du boîtier de commande manuelle. Lorsque l'opérateur a terminé son intervention à l'aide du boîtier de commande manuelle, il peut avoir besoin de déconnecter le boîtier de commande manuelle, par exemple pour le connecter à une unité de contrôle d'un autre bras de robot. En l'absence de dispositif particulier, la déconnexion du boîtier de commande manuelle entraîne automatiquement le déclenchement d'un arrêt d'urgence..

Pour éviter une telle activation de l'arrêt d'urgence lors de la déconnexion du boîtier de commande manuelle, US5444342 propose d'équiper le boîtier de commande manuelle avec un contacteur de connexion/déconnexion du boîtier de commande manuelle, qu'il est nécessaire d'activer avant la déconnexion du boîtier de commande manuelle, pour permettre la déconnexion. Lors de l'activation de ce contacteur, le circuit électrique du bouton d'arrêt d'urgence est shunté, de sorte que la déconnexion du boîtier de commande manuelle n'entraîne pas le déclenchement d'un arrêt d'urgence. De plus, lors de l'activation du contacteur de connexion/déconnexion, l'alimentation en énergie électrique des circuits fonctionnels du boîtier de commande manuelle est coupée, de sorte qu'il est impossible d'utiliser le boîtier de commande manuelle lorsque le bouton d'arrêt d'urgence n'est pas fonctionnel.

La solution de US5444342 n'est pas conforme aux nouvelles contraintes de sécurité qui imposent que la défaillance d'un élément ne compromette pas la sécurité de l'opérateur. En effet, à titre d'exemple, une défaillance du dispositif de coupure de l'alimentation électrique des circuits fonctionnels du boîtier de commande manuelle peut permettre à l'opérateur d'utiliser le boîtier de commande manuelle alors que le bouton d'arrêt d'urgence est désactivé.

Pour respecter les contraintes de sécurité, le bouton d'arrêt d'urgence et le contacteur homme-mort sont chacun câblés sur deux lignes électriques indépendantes, qui sont reliées à un contrôleur de sécurité apte à détecter les éventuelles anomalies de câblage et à déclencher l'arrêt d'urgence. Cette structure nécessite de remplacer le connecteur du cordon du boîtier de commande manuelle, reliant le boîtier à l'unité de contrôle du robot, par un bouchon qui ferme les lignes électriques du bouton d'arrêt d'urgence afin que le contrôleur de sécurité autorise le fonctionnement du robot. Un inconvénient de ce bouchon est que le contrôleur de sécurité n'est pas apte à différencier le bouchon du boîtier de commande manuelle, ce qui ne permet pas notamment de mettre en place des routines de sécurité qui dépendent de la présence ou de l'absence du boîtier de commande manuelle.

Un procédé de déconnexion d'un boîtier de commande manuelle est connu de EP-A-1 898 280. La première étape de ce procédé consiste à éteindre le boîtier de commande manuelle et à enregistrer cet état éteint, de manière que l'unité de surveillance ignore le défaut d'émission d'un signal de fonctionnement de la part du boîtier. Lors de la déconnexion du boîtier de commande manuelle, un interrupteur est actionné pour empêcher le déclenchement de l'arrêt d'urgence. Si cet interrupteur n'est pas actionné après une période de temps prédéterminée, l'unité de commande est basculée dans un mode dit « sécurisé ».

Par ailleurs, DE-A-43 15 991 divulgue une boucle de courant pour l'arrêt d'urgence d'une machine ayant un bouton d'arrêt d'urgence. Cette boucle de courant comporte un contacteur qui est agencé en série avec le contact électrique du bouton et qui comprend plusieurs contacts électriques conçus pour fermer différents circuits électriques de la machine en cas d'arrêt d'urgence. La boucle de courant est connectée avec une boucle d'arrêt d'urgence, qui est une boucle ouverte comportant deux bornes. Ces bornes sont connectées à un bouchon de pontage ou à un circuit auxiliaire comportant un autre bouton d'arrêt d'urgence. Un interrupteur permet de connecter les bornes à la boucle de courant.

L'invention vise à proposer un procédé de déconnexion d'un boîtier de commande manuelle d'un robot multi-axes permettant de satisfaire les contraintes de sécurité.

A cet effet, l'invention a pour objet un procédé de déconnexion d'un boîtier de commande manuelle selon la revendication 1.

Grâce à l'invention, le boîtier de commande manuel peut être déconnecté sans déclencher d'arrêt d'urgence. De plus, lorsque le boîtier de commande manuelle n'est pas déconnecté au terme d'une durée prédéterminée, alors le contrôleur de sécurité détecte qu'au moins un circuit de câblage du bouton d'arrêt d'urgence ou du contacteur homme-mort n'est pas dans l'état attendu et déclenche l'arrêt d'urgence.

Le bouchon particulier mis en oeuvre dans l'invention permet au contrôleur de sécurité de détecter la présence du bouchon avec un haut niveau de sécurité, similaire au niveau de sécurité de l'arrêt d'urgence, grâce à deux signaux redondants de catégorie 4/PLe selon la norme ISO 13849-1 ou SIL3 selon la norme IEC62061. L'amélioration du niveau de sécurité est réalisée sans coût additionnel, et permet à l'unité centrale de faire aisément la différence entre une absence de communication causée par une erreur de l'appareil, et une absence de communication causée par la présence du bouchon.

Des aspects avantageux mais non obligatoires du procédé sont définis dans les revendications 2 à 6.

Un autre objet de l'invention concerne un robot multi-axes tel que défini à la revendication 7.

Des aspects avantageux mais non obligatoires du robot sont définis dans les revendications 8 et 9.

L'invention sera mieux comprise à la lecture de la description qui va suivre d'un robot multi-axes et d'un procédé de déconnexion d'un boîtier de commande manuelle d'un tel robot, donnée uniquement à titre d'exemple et faite en référence aux dessins annexés dans lesquels :
- la figure 1 est une vue schématique d'un robot multi-axes conforme à l'invention ;
- la figure 2 est un schéma du câblage d'un boîtier de commande manuelle du robot de la figure 1 au contrôleur de sécurité ; et
- la figure 3 est un schéma de câblage d'un bouchon du robot de la figure 1.

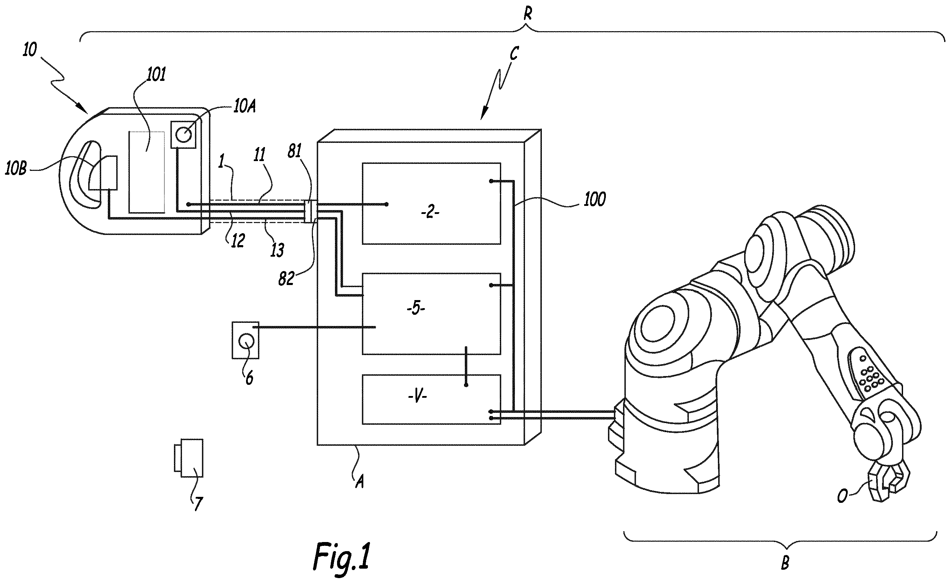

Le bras B du robot R multi-axes représenté à la figure 1 est pourvu de degrés de liberté, par exemple au nombre de six, commandés chacun par un moteur apte à déplacer une partie mobile du bras de robot B autour d'axes géométriques, pour déplacer un outil O dans l'espace. Les moteurs sont par exemple des moteurs triphasés sans balai. Chaque moteur coopère avec un frein électromagnétique.

Des capteurs de position ou codeurs sont répartis dans le bras de robot B et permettent de mesurer des informations de mouvements relatives aux degrés des libertés, par exemple la position angulaire des parties mobiles autour de chacun des axes.

En variante, les capteurs mesurent la vitesse ou l'accélération des parties mobiles, ou une combinaison d'informations de mouvement parmi la position, la vitesse et l'accélération.

Le bras de robot B est piloté par un contrôleur de robot C disposé dans une armoire A séparée du bras de robot B. L'armoire A renferme notamment une unité centrale 2, des variateurs de puissance V et un contrôleur de sécurité 5. Ces trois éléments 2, V et 5 communiquent entre eux par l'intermédiaire d'un bus commun 100.

Un contacteur de connexion/déconnexion 6 du boîtier de commande manuelle 10 est relié électriquement au contrôleur de sécurité 5. Ce contacteur 6 est accessible depuis l'extérieur de l'armoire A du contrôleur de robot C et permet à un opérateur de transmettre un ordre de déconnexion au contrôleur de robot C.

L'unité centrale 2 est configurée pour exécuter des programmes de commande du bras de robot B. Elle assure la génération de la trajectoire de l'outil O à partir d'ordres de mouvement. L'unité centrale 2 assure également le calcul des positions angulaires à atteindre pour chacun des degrés de liberté du bras de robot B, en appliquant un modèle cinématique associé au bras de robot B, ainsi que le calcul des positions angulaires à atteindre pour chaque moteur en tenant compte des réductions et des couplages éventuels. Ces consignes de position des moteurs sont envoyées au variateur V de chaque moteur.

Les variateurs V assurent l'alimentation en énergie électrique des phases des moteurs et incorporent une fonction de coupure du couple.

Un boîtier de commande manuelle 10 communique avec l'unité centrale 2 par l'intermédiaire d'une liaison Ethernet formée par un câble 11, et comporte une interface de communication avec un opérateur, tel qu'un écran tactile 101. Cette interface 101 permet à un opérateur de transmettre des ordres de commande au robot R et de recevoir des informations de fonctionnement du robot R, par exemple la position de l'outil O. Le boîtier de commande manuelle 10 dispose d'un bouton d'arrêt d'urgence 10A et d'un contacteur homme-mort 10B. Le bouton d'arrêt d'urgence 10A et le contacteur homme-mort 10B sont reliés séparément à l'armoire A, au moyen de deux liaisons électriques distinctes 12 et 13.

L'ensemble des câbles électriques des liaisons 11, 12 et 13 entre le boîtier de commande manuelle 10 et le contrôleur robot C sont rassemblés dans un cordon unique 1 muni à son extrémité libre d'un premier connecteur 81, destiné à être connecté avec un deuxième connecteur 82 du boîtier de commande manuelle 10, situé sur l'armoire A du contrôleur robot C.

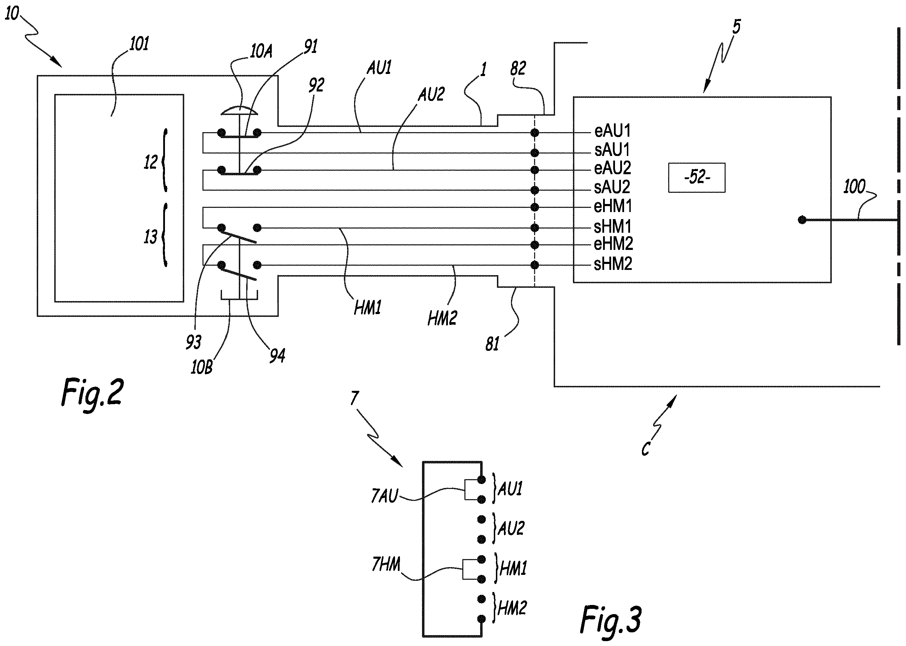

Comme représenté aux figures 2 et 3, les liaisons électriques 12 et 13 du bouton d'arrêt d'urgence 10A et du contacteur homme-mort 10B sont dotées chacune d'un premier circuit de câblage AU1 ou HM1 et d'un second circuit de câblage AU2 ou HM2, qui garantissent un niveau de sécurité double.

Les circuits de câblage AU1 et AU2 du bouton d'arrêt d'urgence 10A appartiennent à la liaison 12 et sont dotés chacun d'un interrupteur 91 ou 92. Les deux interrupteurs 91 et 92 sont fermés par défaut, de sorte qu'ils autorisent le passage du courant électrique dans les circuits de câblage AU1 et AU2, et sont reliés mécaniquement de manière synchronisée au bouton d'arrêt d'urgence 10A. En d'autres termes, l'appui sur le bouton d'arrêt d'urgence 10A entraine l'ouverture simultanée des deux interrupteurs 91 et 92.

Les circuits de câblage HM1 et HM2 du contacteur homme-mort 10B appartiennent à la liaison 13 et sont dotés chacun d'un interrupteur 93 ou 94. Les deux interrupteurs 93 et 94 sont ouverts par défaut, de sorte qu'ils empêchent le passage du courant électrique dans les circuits HM1 et HM2. Les interrupteurs 93 et 94 sont reliés mécaniquement de manière synchronisée au contacteur homme-mort 10B. Ainsi, l'appui sur contacteur homme-mort 10B entraine la fermeture simultanée des deux interrupteurs 93 et 94.

Pour le câblage de l'arrêt d'urgence 10A, le cordon 1 du boîtier de commande manuelle 10 et les connecteurs 81 et 82 comportent quatre conducteurs électriques, à savoir une ligne d'entrée eAU1 et une ligne de sortie sAU1 appartenant au premier circuit de câblage AU1, et une ligne d'entrée eAU2 ainsi qu'une ligne de sortie sAU2 appartenant au second circuit de câblage AU2, au sein du câble de la liaison électrique 12.

L'interrupteur 91 est intercalé entre les lignes eAU1 et sAU1 du premier circuit de câblage AU1 du bouton d'arrêt d'urgence 10A. L'interrupteur 92 est intercalé entre les lignes eAU2 et sAU2 du second circuit de câblage AU2 du bouton d'arrêt d'urgence 10A.

De même, pour le câblage du contacteur homme-mort 10B, le cordon 1 du boîtier de commande manuelle 10 et les connecteurs 81 et 82 comportent quatre conducteurs électriques supplémentaires, à savoir une ligne d'entrée eHM1 et une ligne de sortie sHM1 appartenant au premier circuit de câblage HM1, et une ligne d'entrée eHM2 ainsi qu'une ligne de sortie sHM2 appartenant au second circuit de câblage HM2, au sein du câble de la liaison électrique 13.

L'interrupteur 93 est intercalé entre les lignes eHM1 et sHM1 du premier circuit de câblage HM1 du contacteur homme-mort 10B. L'interrupteur 94 est intercalé entre les lignes eHM2 et sHM2 du second circuit de câblage HM2 du contacteur homme-mort 10B.

Du côté du contrôleur de robot C, chaque ligne électrique eAU1, sAU1, eAU2, sAU2, eHM1, sHM1, eHM2 et sHM2 est reliée au contrôleur de sécurité 5 de manière à fermer chaque circuit de câblage AU1, AU2, HM1 et HM2.

Le contrôleur de sécurité 5 comporte une unité de calcul 52 apte à réaliser des fonctions de sécurité, sur la base d'informations rendues accessibles par le bus commun 100 et par les lignes d'entrée eAU1, eAU2, eHM1 et eHM2 et de sortie sAU1, sAU2, sHM1 et sHM2 reliées à l'arrêt d'urgence 10A et au contacteur homme-mort 10B. L'unité de calcul 52 est apte à vérifier si un circuit de câblage AU1, AU2, HM1 ou HM2 est fermé ou ouvert en appliquant un signal électrique à sa ligne d'entrée eAU1, eAU2, eHM1 ou eHM2 et en comparant ce signal à un signal mesuré à la ligne de sortie sAU1, sAU2, sHM1 ou sHM2 de ce circuit. L'unité de calcul 52 est apte à déclencher un arrêt d'urgence du bras de robot B, au cours duquel l'unité de calcul 52 active la fonction de coupure du couple des variateurs V.

Lors de l'utilisation du robot R, le contrôleur de sécurité 5 effectue en permanence un contrôle des circuits de câblage du bouton d'arrêt d'urgence AU1 et AU2 et du contacteur d'homme-mort HM1 et HM2. Ce contrôle est appelé surveillance normale des circuits de câblage du bouton d'arrêt d'urgence AU1 et AU2 et du contacteur d'homme-mort HM1 et HM2. Plus précisément, le contrôleur de sécurité 5 teste si le courant passe dans chaque circuit de câblage AU1, AU2, HM1 et HM2 et enregistre l'état électrique de chaque circuit. Le contrôleur de sécurité 5 récupère l'information logique « 0 » lorsque le circuit est ouvert, c'est-à-dire lorsque le courant ne passe pas, et l'information logique « 1 » lorsque le circuit est fermé, c'est-à-dire lorsque le courant passe.

Dans la suite, on note (a, b) le couple d'informations logiques des circuits de câblage AU1 et AU2 du bouton d'arrêt d'urgence 10A, ou respectivement des circuits de câblage HM1 et HM2 du contacteur homme-mort 10B. « a » est l'état électrique du premier circuit de câblage AU1 ou HM1, et « b » est l'état électrique du deuxième circuit de câblage AU2 ou HM2.

Pour les circuits de câblage AU1 et AU2 du bouton d'arrêt d'urgence10A, le couple d'informations logiques (1, 1) récupéré simultanément correspond à un état de fonctionnement autorisé du bras de robot B. Le bouton d'arrêt d'urgence 10A n'est pas actionné et les interrupteurs 91 et 92 sont fermés.

Pour les circuits de câblage AU1 et AU2 du bouton d'arrêt d'urgence 10A, le couple d'informations logiques (0, 0) récupéré simultanément correspond à un état d'arrêt d'urgence du bras de robot B. Le bouton d'arrêt d'urgence 10A est actionné et les interrupteurs 91 et 92 sont ouverts. Le contrôleur de sécurité 5 déclenche alors l'arrêt d'urgence, s'il n'est pas déjà activé.

Pour les circuits de câblage AU1 et AU2 du bouton d'arrêt d'urgence 10A, les couples d'informations logiques (0, 1) et (1, 0) récupérés simultanément correspondent à un dysfonctionnement des circuits de câblage AU1 ou AU2. Dans ces deux cas, le contrôleur de sécurité 5 déclenche l'arrêt d'urgence et émet un signalement d'un défaut des circuits de câblage AU1 et AU2 du bouton d'arrêt d'urgence 10A.

Pour les circuits de câblage HM1 et HM2 du contacteur homme-mort 10B, le couple d'informations logiques (1, 1) récupéré simultanément correspond à un actionnement du contacteur homme-mort 10B par un opérateur. Le boitier de commande manuelle 10 est activé et le boitier 10 est autorisé à commander le bras de robot B. Les interrupteurs 93 et 94 sont fermés.

Pour les circuits de câblage HM1 et HM2 du contacteur homme-mort 10B, le couple d'informations logiques (0, 0) récupéré simultanément correspond à un état de désactivation du boîtier de commande manuelle 10 dans lequel l'unité centrale 2 ne tient plus compte des commandes issues du boîtier de commande manuelle 10. L'opérateur n'agit pas sur le contacteur homme-mort 10B. Les interrupteurs 93 et 94 sont ouverts.

Les couples d'informations logiques (0, 1) et (1, 0) récupérés simultanément sur les circuits de câblage HM1 et HM2 correspondent à des dysfonctionnements des circuits de câblage HM1 ou HM2. Dans ces deux cas, le contrôleur de sécurité 5 déclenche l'arrêt d'urgence et émet un signalement d'un défaut des circuits de câblage HM1 et HM2 du contacteur homme-mort 10B.

Le contrôleur de robot C comprend en outre un bouchon 7, représenté schématiquement à la figure 3, destiné à être connecté au second connecteur 82 de l'armoire A, sur le contrôleur de robot C, à la place du premier connecteur 81, lorsque le boîtier de commande manuelle 10 a été retiré. Lorsque le bouchon 7 est connecté au second connecteur 82, les lignes électriques eAU1 et sAU1 du premier circuit de câblage AU1 du bouton d'arrêt d'urgence 10A sont connectées entre elles électriquement par l'intermédiaire de conducteurs électriques 7AU du bouchon 7. De même, les lignes électriques eHM1 et sHM1 du premier circuit de câblage HM1 du contacteur homme-mort 10B sont connectées entre elles électriquement par l'intermédiaire de conducteurs électriques 7HM du bouchon 7. Le bouchon 7 n'inclut pas de moyens de fermeture des circuits de câblage AU2 et HM2. Lorsque le bouchon 7 est connecté au connecteur 82, les circuits de câblage AU2 et HM2 sont ouverts.

En variante, le bouchon 7 relie électriquement les lignes électriques eAU2 et sAU2 du deuxième circuit d'arrêt d'urgence AU2, et les lignes électriques eHM2 et sHM2 du deuxième circuit homme-mort HM2, tandis que les lignes électriques eAU1 et sAU1 du premier circuit d'arrêt d'urgence AU1, et les lignes électriques eHM1 et sHM1 du premier circuit homme-mort HM1 ne sont pas reliées, de sorte que le bouchon 7 ferme uniquement les circuits AU2 et HM2 tandis que les circuits AU1 et HM1 restent ouverts.

Ainsi, le bouchon 7 relie électriquement les lignes d'entrée et de sortie d'un seul des deux circuits de câblage AU1 ou AU2 du bouton d'arrêt d'urgence 10A, et les lignes d'entrée et sortie d'un seul des deux circuits de câblage HM1 et HM2 du contacteur homme-mort 10B.

La suite de la description concerne un procédé de déconnexion du boitier de commande manuelle 10, pour la déconnexion entre le boitier de commande manuelle 10 et le contrôleur de robot C.

Dans une première étape a), lorsqu'un opérateur souhaite déconnecter le boitier de commande manuelle 10 du contrôleur de robot C, il sélectionne à l'aide de l'interface 101 une fonction de déconnexion du boitier de commande manuelle 10. Cette demande de déconnexion est transmise à l'unité centrale 2 qui enregistre l'ordre et le transmet au contrôleur de sécurité 5.

En variante, l'ordre de déconnexion est transmis au contrôleur de sécurité 5 par le contacteur de déconnexion 6.

Dans une deuxième étape b) postérieure à l'étape a), le contrôleur de sécurité 5 suspend le contrôle des circuits de câblage AU1, AU2, HM1 et HM2 du bouton d'arrêt d'urgence 10A et du contacteur d'homme-mort 10B pendant une durée déterminée t1, par exemple 30 secondes, démarrant lors de la demande de déconnexion. En d'autres termes, le contrôleur de sécurité 5 ne déclenche pas d'arrêt d'urgence même si les couples d'informations logiques des circuits de câblage AU1 et AU2 sont différents de (1, 1). Ainsi, la fonction d'activation de la coupure du couple, assurée par le contrôleur de sécurité 5, est désactivée.

Dans une troisième étape c), postérieure à l'étape b), le contrôleur de sécurité 5 procède alors à un test des circuits de câblage AU1, AU2, HM1 et HM2 du bouton d'arrêt d'urgence 10A et du contacteur homme mort 10B.

Ce test consiste à vérifier deux conditions X et Y. Selon la première condition X, un circuit d'arrêt d'urgence AU1 ou AU2 est ouvert alors que l'autre circuit AU2 ou AU1 est fermé, ce qui correspond aux couples d'informations logiques (0,1) et (1,0). Selon la deuxième condition Y, un circuit homme-mort HM1 ou HM2 est ouvert, alors que l'autre circuit HM2 ou HM1 est fermé, ce qui correspond aux couples d'informations logiques (0,1) et (1,0).

On note (a, b, c, d) le quadruplet d'informations logiques des circuits de câblage AU1, AU2, HM1 et HM2. « a » est l'état électrique du premier circuit de câblage du bouton d'arrêt d'urgence AU1, « b » est l'état électrique du deuxième circuit de câblage du bouton d'arrêt d'urgence AU2, « c » est l'état électrique du premier circuit de câblage du contacteur homme-mort HM1 et « d » est l'état électrique du deuxième circuit de câblage du contacteur homme-mort HM2.

Avec le bouchon 7 de l'exemple représenté sur les figures, les deux conditions X et Y sont vérifiées lorsque les informations logiques des circuits de câblage AU1, AU2, HM1 et HM2 sont égales à (1, 0, 1, 0).

Durant la deuxième étape b), si un opérateur déconnecte le cordon 1 du boitier de commande manuelle 10 et connecte le bouchon 7 sur le deuxième connecteur 82 pendant la durée prédéterminée t1, alors le contrôleur de sécurité 5 détecte au cours de la troisième étape c) que les deux conditions X et Y sont remplies, à savoir qu'un seul circuit de câblage AU1 du bouton d'arrêt d'urgence 10B est fermé et qu'un seul circuit de câblage HM1 du contacteur homme-mort 10B est fermé. Le contrôleur de sécurité 5 clôture la procédure de test sans déclencher l'arrêt d'urgence. Lors de la procédure de test, le contrôleur de sécurité 5 analyse simultanément l'état électrique des circuits de câblage AU1 et AU2 du bouton d'arrêt d'urgence 10A et des circuits de câblage HM1 et HM2 du contacteur homme-mort 10B.

Dans la troisième étape c), au terme de la durée prédéterminée t1 après la demande de déconnexion, et si les deux conditions X et Y ne sont pas remplies, le contrôleur de sécurité 5 déclenche l'arrêt d'urgence. Dans un premier cas, cela signifie que l'opérateur n'a pas débranché le cordon 1 et que le boîtier de commande manuelle 10 est toujours connecté au terme de la durée prédéterminée t1. Cette configuration correspond aux informations logiques (1, 1, 0, 0). L'arrêt d'urgence déclenché par le contrôleur de sécurité 5 permet alors à l'opérateur de procéder à la déconnexion du boitier de commande manuelle 10 de manière sécurisée, en débranchant le cordon 1. Les informations logiques des circuits de câblage AU1, AU2, HM1 et HM2 sont alors égales à (0, 0, 0, 0). La procédure de test prend fin.

Dans un deuxième cas, les deux conditions X et Y ne sont pas remplies lorsque l'opérateur a débranché le cordon 1 mais n'a pas connecté le bouchon 7 sur le deuxième connecteur 82 au terme de la durée prédéterminée t1. Les informations logiques des circuits AU1, AU2, HM1 et HM2 sont alors égales à (0, 0, 0, 0). L'opérateur doit alors connecter le bouchon 7 au deuxième connecteur 82 pour que les conditions X et Y soient remplies et que la procédure de test prenne fin. L'arrêt d'urgence étant déclenché, l'utilisateur peut connecter le bouchon 7 en toute sécurité.

Ainsi, au terme de la durée prédéterminée t1, le contrôleur de sécurité 5 ne déclenche pas un arrêt d'urgence du bras de robot B si et seulement si, d'une part, un seul des deux circuits de câblage AU1 et AU2 du bouton d'arrêt d'urgence 10A est ouvert et, d'autre part, un seul des deux circuits de câblage HM1 HM2 du contacteur homme-mort 10B est ouvert. Dans l'exemple du bouchon 7 représenté sur les figures, cela correspond au quadruplet d'informations logiques (1, 0, 1, 0). En variante, il peut s'agir des configurations suivantes : (1, 0, 0, 1), (0, 1, 0, 1) ou (0, 1, 1, 0).

On dénombre quatre configurations de fonctionnement sans défaillance matérielle du robot :
- lorsque les circuits de câblage AU1, AU2, HM1 et HM2 sont tous ouverts : (0, 0, 0, 0),
- lorsque les circuits de câblage AU1, AU2, HM1 et HM2 sont tous fermés : (1, 1, 1, 1),
- lorsque les deux circuits de câblage AU1 et AU2 du bouton d'arrêt d'urgence 10A sont ouverts tandis que les deux circuits de câblage du contacteur d'homme-mort 10B sont fermés : (0, 0, 1, 1),
- lorsque les deux circuits de câblage AU1 et AU2 du bouton d'arrêt d'urgence 10A sont fermés tandis que les deux circuits de câblage HM1 et HM2 du contacteur homme-mort 10B sont ouverts : (1, 1, 0, 0).

Pour qu'une erreur de fonctionnement ait pour conséquence que le contrôleur de robot C détecte par erreur la présence du bouchon 7 alors qu'il n'a pas été mis en place, et ne déclenche pas l'arrêt d'urgence par erreur, il est nécessaire que deux défaillances surviennent simultanément, à savoir une première défaillance concernant l'état électrique d'un seul des circuits de câblage AU1 et AU2 du bouton d'arrêt d'urgence 10A, et une deuxième défaillance concernant l'état électrique d'un seul des circuits de câblage HM1 et HM2 du contacteur homme-mort 10B.

Ainsi, la procédure de déconnexion est conforme aux principes de sécurité exigeant une détection sûre des défaillances du système de sécurité du contrôleur de robot C.

La suite concerne un procédé de connexion du boîtier de commande manuelle 10 au contrôleur de robot C, qui comporte trois étapes a'), b') et c') successives.

Dans la première étape a'), l'opérateur retire le bouchon 7. Cette étape peut faire suite à la reconnexion du bouchon 7, lors du procédé de déconnexion, comme décrit ci-dessus.

Dans la deuxième étape b'), le contrôleur de sécurité 5 détecte le retrait du bouchon 7 en appliquant un signal électrique à chaque ligne d'entrée eAU1, eAU2, eHM1 ou eHM2 et en comparant ce signal à un signal mesuré à la ligne de sortie sAU1, sAU2, sHM1 ou sHM2 de ce circuit. Lorsque le bouchon 7 est déconnecté, les informations logiques des circuits de câblage AU1, AU2, HM1 et HM2 sont égales à (0, 0, 0, 0). Le contrôleur de sécurité 5 suspend alors le contrôle des circuits de câblage AU1, AU2, HM1 et HM2 de manière à ne pas déclencher d'arrêt d'urgence pendant une deuxième durée prédéterminée t2 démarrant lors du retrait du bouchon 7, par exemple 30 secondes.

Dans la troisième étape c'), le contrôleur de sécurité 5 procède alors à une séquence de test de l'état électrique des circuits de câblage AU1, AU2, HM1 et HM2, comme décrit dans l'étape c) du procédé de déconnexion.

Si les deux conditions X et Y énoncées précédemment ne sont pas remplies à la fin de la deuxième durée prédéterminée t2, le contrôleur de sécurité 5 considère que le bouchon 7 est toujours absent et réactive le contrôle des circuits de câblage AU1, AU2, HM1 et HM2 du bouton d'arrêt d'urgence 10A et du contacteur d'homme-mort HM1 et HM2. Il est alors en mesure d'effectuer la fonction de surveillance normale des circuits AU1, AU2, HM1 et HM2. Le procédé de connexion prend fin.

Si le boîtier de commande manuelle 10 est connecté et que les deux circuits de câblage AU1 et AU2 du bouton d'arrêt d'urgence 10A sont fermés, le contrôleur de sécurité 5 ne déclenche pas d'arrêt d'urgence. Si le boîtier de commande manuelle 10 n'est pas connecté alors le contrôleur de sécurité 5 déclenche un arrêt d'urgence puisqu'il aura détecté que les deux circuits de câblage AU1 et AU2 du bouton d'arrêt d'urgence 10A sont ouverts.

Si les deux conditions X et Y sont remplies, cela signifie que le bouchon 7 a été reconnecté et que le contrôleur de robot C est retourné dans la configuration précédente. Le procédé de connexion prend fin.

De cette manière, la procédure de connexion est également conforme aux principes de sécurité exigeant une détection sûre des défaillances du système de sécurité du contrôleur de robot C. L'arrêt d'urgence est déclenché si, au terme de la deuxième durée prédéterminée t2, l'utilisateur n'a pas rebranché le boîtier de commande manuelle 10 ou n'a pas rebranché le bouchon 7.

L'invention s'applique à tous les types de robots multi-axes.

Dans le cadre de l'invention, les variantes décrites peuvent être combinées entre elles, au moins de manière partielle.

## Revendications

1. Procédé de déconnexion d'un boîtier de commande manuelle (10) d'un robot multi-axes (R), le boîtier de commande manuelle (10) comportant :
- un bouton d'arrêt d'urgence (10A),
- un contacteur homme-mort (10B),
- un cordon (1) de connexion du boitier de commande manuelle (10) avec un contrôleur de robot (C), le cordon (1) comportant :
- une ligne électrique d'entrée (eAU1, eAU2) et une ligne électrique de sortie (sAU1, sAU2) pour chacun de deux circuits (AU1, AU2) de câblage du bouton d'arrêt d'urgence (10A), et
- une ligne électrique d'entrée (eHM1, eHM2) et une ligne électrique de sortie (sHM1, sHM2) pour chacun de deux circuits (HM1, HM2) de câblage du contacteur homme-mort (10B),
le contrôleur de robot (C) incluant :
- une unité centrale (2) apte à exécuter des programmes de commande du bras de robot (B) et
- un contrôleur de sécurité (5) apte à tester les deux circuits de câblage (AU1, AU2) du bouton d'arrêt d'urgence (10A) et les deux circuits (HM1, HM2) de câblage du contacteur homme-mort (10B), et à déclencher un arrêt d'urgence du bras de robot (B),
**caractérisé en ce qu'**il comprend des étapes successives dans lesquelles :
- a) un opérateur effectue une demande de déconnexion du boitier de commande manuelle (10),
- b) pendant une durée prédéterminée (t1) démarrant lors de la demande de déconnexion, le contrôleur de sécurité (5) suspend le contrôle des deux circuits électriques de câblage (AU1, AU2) du bouton d'arrêt d'urgence (10A) et des deux circuits (HM1, HM2) de câblage du contacteur homme-mort (10B) de manière à ne pas déclencher l'arrêt d'urgence,
- c) au terme de la durée prédéterminée (t1), le contrôleur de sécurité (5) ne déclenche pas un arrêt d'urgence du bras de robot (B) si et seulement si, d'une part, un seul des deux circuits de câblage (AU1, AU2) du bouton d'arrêt d'urgence (10A) est ouvert et, d'autre part, un seul des deux circuits de câblage (HM1, HM2) du contacteur homme-mort (10B) est ouvert.

2. Procédé selon la revendication 1, **caractérisé en ce que** lors de l'étape b), un opérateur connecte un bouchon (7) au contrôleur de robot (C) à la place du cordon (1), le bouchon (7) fermant un seul des deux circuits de câblage (AU1, AU2)) du bouton d'arrêt d'urgence (10A) et fermant un seul des deux circuits de câblage (HM1, HM2) du contacteur homme-mort (10B).

3. Procédé selon la revendication 2, **caractérisé en ce qu'**il comprend en outre des étapes ultérieures dans lesquelles :
- a') un opérateur retire le bouchon (7),
- b') pendant une deuxième durée prédéterminée (t2) démarrant lors du retrait du bouchon (7), le contrôleur de sécurité (5) suspend le contrôle des deux circuits électriques de câblage (AU1, AU2) du bouton d'arrêt d'urgence (10A) et des deux circuits (HM1, HM2) de câblage du contacteur homme-mort (10B) de manière à ne pas déclencher l'arrêt d'urgence,
- c') au terme de la deuxième durée prédéterminée (t2), le contrôleur de sécurité (5) déclenche l'arrêt d'urgence si les deux circuits de câblage (AU1, AU2) du bouton d'arrêt d'urgence (10A) sont ouverts et si les deux circuits de câblage (HM1, HM2) du contacteur homme-mort (10B) sont ouverts.

4. Procédé selon l'une des revendications précédentes, **caractérisé en ce que** lors de l'étape a), la demande de déconnexion est effectuée à l'aide du boitier de commande manuelle (10).

5. Procédé selon la revendication 4, **caractérisé en ce que** l'ordre de demande de déconnexion est reçu par une interface, notamment un écran tactile (101) du boîtier de commande manuelle (10).

6. Procédé selon l'une des revendications 1 à 2, **caractérisé en ce que** lors de l'étape a), la demande de déconnexion est effectuée à l'aide d'un contacteur de déconnexion (6) relié au contrôleur de sécurité (5).

7. Robot multi-axes (R) agencé pour la mise en oeuvre d'un procédé selon l'une des revendications précédentes, le robot comportant un contrôleur de robot (C) et un boîtier de commande manuelle (10) qui comporte :
- un bouton d'arrêt d'urgence (10A),
- un contacteur homme-mort (10B),
- un cordon (1) de connexion du boitier de commande manuelle (10) avec le contrôleur de robot (C), le cordon (1) comportant :
- une ligne électrique d'entrée (eAU1, eAU2) et une ligne électrique de sortie (sAU1, sAU2) pour chacun de deux circuits (AU1, AU2) de câblage du bouton d'arrêt d'urgence (10A), et
- une ligne électrique d'entrée (eHM1, eHM2) et une ligne électrique de sortie (sHM1, sHM2) pour chacun de deux circuits (HM1, HM2) de câblage du contacteur homme-mort (10B),
le contrôleur de robot (C) incluant :
- une unité centrale (2) apte à exécuter des programmes de commande du bras de robot (B) et
- un contrôleur de sécurité (5) apte à tester les deux circuits de câblage (AU1, AU2) du bouton d'arrêt d'urgence et les deux circuits de câblage (HM1, HM2) du contacteur homme-mort (10B) et à déclencher un arrêt d'urgence du bras de robot (B) et agencé pour la mise en oeuvre de la troisième étape c),
le robot comprenant en outre un bouchon (7) apte à fermer, lorsqu'il est connecté au contrôleur de robot (C) à la place du cordon (1), un seul des deux circuits de câblage (AU1, AU2) du bouton d'arrêt d'urgence (10A) et un seul des deux circuits de câblage (HM1, HM2) du contacteur homme-mort (10B).

8. Robot multi-axes (R) selon la revendication 7, **caractérisé en ce que** le boîtier de commande manuelle (10) comprend une interface, notamment un écran tactile (101), apte à recevoir un ordre de demande de déconnexion.

9. Robot multi-axes (R) selon la revendication 7 ou 8, **caractérisé en ce que** le contrôleur de robot (C) comprend un contacteur de déconnexion (6) relié au contrôleur de sécurité (5) et apte à recevoir un ordre de demande de déconnexion.

## Patentansprüche

1. Verfahren zur Trennung eines manuellen Steuerkastens (10) von einem Mehrachsenroboter (R), wobei der manuelle Steuerkasten (10) umfasst:
- eine Nothalttaste (10A),
- einen Totmannkontakt (10B),
- ein Kabel (1) zum Verbinden des manuellen Steuerkastens (10) mit der Steuervorrichtung des Roboters (C), wobei das Kabel (1) umfasst:
- eine elektrische Eingangsleitung (eAu1, eAU2) und eine elektrische Ausgangsleitung (sAU1, sAU2) für jeden von zwei Leitungskreisen (AU1, AU2) der Nothalttaste (10A), und
- eine elektrische Eingangsleitung (eHM1, eHM2) und eine elektrische Ausgangsleitung (sHM1, sHM2) für jeden von zwei Leitungskreisen (HM1, HM2) des Totmannkontakts (10B),
wobei die Steuervorrichtung des Roboters (C) einschließt:
- eine Zentraleinheit (2), die geeignet ist, Programme zur Steuerung des Roboterarms (B) auszuführen, und
- eine Sicherheitssteuervorrichtung (5), die in der Lage ist, die zwei Leitungskreise (AU1, AU2) der Nothalttaste (10A) und die zwei Leitungskreise (HM1, HM2) des Totmannkontakts (10B) zu testen und einen Nothalt des Roboterarms (B) auszulösen,
**dadurch gekennzeichnet, dass** es die aufeinanderfolgenden Schritte umfasst, bei denen:
- a) eine Bedienperson einer Anfrage zur Trennung des manuellen Steuerkastens (10) durchführt,
- b) die Sicherheitssteuervorrichtung (5) die Steuerung der zwei elektrischen Leitungskreise (AU1, AU2) der Nothalttaste (10A) und der zwei Leitungskreise (HM1, HM2) des Totmannkontakts (10B) während einer vorbestimmten Dauer (t1), startend bei der Anfrage zur Trennung, aussetzt, derart, dass der Nothalt nicht ausgelöst wird,
- c) die Sicherheitssteuervorrichtung (5) nach Ablauf der vorbestimmten Dauer (t1) nicht einen Nothalt des Roboterarms (B) auslöst, wenn und nur dann einerseits ein einziger der zwei Leitungskreise (AU1, AU2) der Nothalttaste (10A) offen ist, und andererseits ein einziger der zwei Leitungskreise (HM1, HM2) des Totmannkontakts (10B) offen ist.

2. Verfahren nach Anspruch 1, **dadurch gekennzeichnet, dass** bei dem Schritt b) eine Bedienperson anstelle des Kabels (1) einen Stecker (7) mit der Steuervorrichtung des Roboters (C) verbindet, wobei der Stecker (7) einen einzigen der zwei Leitungskreise (AU1, AU2) der Nothalttaste (10A) schließt und einen einzigen der zwei Leitungskreise (HM1, HM2) des Totmannkontaktes (10B) schließt.

3. Verfahren nach Anspruch 2, **dadurch gekennzeichnet, dass** es außerdem spätere Schritte umfasst, bei denen:
- a') eine Bedienperson den Stecker (7) herauszieht,
- b') die Sicherheitssteuervorrichtung (5) die Steuerung der zwei elektrischen Leitungskreise (AU1, AU2) der Nothalttaste (10A) und der zwei Leitungskreise (HM1, HM2) des Totmannkontakts, (10B) startend von dem Herausziehen des Steckers, während einer zweiten vorbestimmten Dauer (t2) aussetzt, derart, dass nicht der Nothalt ausgelöst wird,
- c') nach Ablauf der zweiten vorbestimmten Dauer (t2) die Sicherheitssteuervorrichtung (5) den Nothalt auslöst, wenn die zwei Leitungskreise (AU1, AU2) der Nothalttaste (10A) offen sind, und wenn die zwei Leitungskreise (HM1, HM2) des Totmannkontakts (10B) offen sind.

4. Verfahren nach einem der vorhergehenden Ansprüche, **dadurch gekennzeichnet, dass** bei dem Schritt a) die Anfrage zur Trennung mit Hilfe des manuellen Steuerkastens (10) durchgeführt wird.

5. Verfahren nach Anspruch 4, **dadurch gekennzeichnet, dass** der Befehl der Anfrage zur Trennung durch eine Schnittstelle empfangen wird, insbesondere durch einen Tastbildschirm (101) des manuellen Steuerkastens (10).

6. Verfahren nach einem der Ansprüche 1 bis 2, **dadurch gekennzeichnet, dass** bei dem Schritt a) die Anfrage zur Trennung mit Hilfe eines Trennkontakts (6), der mit der Sicherheitssteuervorrichtung (5) verbunden ist, durchgeführt wird.

7. Mehrachsenroboter (R), der für die Umsetzung des Verfahrens nach einem der vorhergehenden Ansprüche ausgebildet ist, wobei der Roboter eine Robotersteuervorrichtung (C) und einen manuellen Steuerkasten (10) aufweist, der umfasst:
- eine Nothaltetaste (10A),
- einen Totmannkontakt (10B),
- ein Kabel (1) zum Verbinden des manuellen Steuerkastens (10) mit der Steuervorrichtung des Roboters (C), wobei das Kabel (1) umfasst:
- eine elektrische Eingangsleitung (eAu1, eAU2) und eine elektrische Ausgangsleitung (sAU1, sAU2) für jeden von zwei Leitungskreisen (AU1, AU2) der Nothalttaste (10A), und
- eine elektrische Eingangsleitung (eHM1, eHM2) und eine elektrische Ausgangsleitung (sHM1, sHM2) für jeden von zwei Leitungskreisen (HM1, HM2) des Totmannkontakts (10B),
wobei die Steuervorrichtung des Roboters (C) einschließt:
- eine Zentraleinheit (2), die geeignet ist, Programme zur Steuerung des Roboterarms (B) auszuführen, und
- eine Sicherheitssteuervorrichtung (5), die in der Lage ist, die zwei Leitungskreise (AU1, AU2) der Nothalttaste (10A) und die zwei Leitungskreise (HM1, HM2) des Totmannkontakts (10B) zu testen und einen Nothalt des Roboterarms (B) auszulösen und die zur Umsetzung des dritten Schrittes c) ausgebildet ist,
wobei der Roboter außerdem einen Stecker (7) umfasst, der geeignet ist, einen einzigen der zwei Leitungskreise (AU1, AU2) der Nothalttaste (10A) und einen einzigen der zwei Leitungskreise (HM1, HM2) des Totmannkontakts (10B) zu schließen, wenn er mit der Steuervorrichtung des Roboters (C) anstelle des Kabels verbunden ist.

8. Mehrachsenroboter (R) nach Anspruch 7, **dadurch gekennzeichnet, dass** der manuelle Steuerkasten (10) eine Schnittstelle, insbesondere einen Tastbildschirm (101) umfasst, der geeignet ist, einen Befehl der Anfrage zur Trennung zu empfangen.

9. Mehrachsenroboter (R) nach Anspruch 7 oder 8, **dadurch gekennzeichnet, dass** die Steuervorrichtung des Roboters (C) einen Trennkontakt (6) umfasst, der mit der Sicherheitssteuervorrichtung (5) verbunden ist und geeignet ist, einen Befehl der Anfrage zur Trennung zu empfangen.

## Claims

1. A method for disconnecting a manual control unit (10) of a multi-axis robot (R), the manual control unit (10) including:
- an emergency stop button (10A),
- a dead man contactor (10B),
- a connecting cord (1) for connecting the manual control unit (10) to a robot controller (C), the cord (1) including:
- an input power line (eAU1, eAU2) and output power line (sAU1, sAU2) for each of the two cabling circuits (AU1, AU2) of the emergency stop button (10A), and
- an input power line (eHM1, eHM2) and output power line (sHM1, sHM2) for each of the two cabling circuits (HM1, HM2) of the dead man contactor (10B),
the robot controller (C) including:
- a central processing unit (2) able to execute programs for commanding the robot arm (B), and
- a safety controller (5) able to test the two cabling circuits (AU1, AU2) of the emergency stop button (10A) and the two cabling circuits (HM1, HM2) of the dead man contactor (10B), and trigger an emergency stop of the robot arm (B), **characterized in that** it comprises successive steps, in which:
- a) an operator makes a request to disconnect the manual control unit (10),
- b) during a predetermined length of time (t1) started upon the disconnection request, the safety controller (5) suspends the control of the two electrical cabling circuits (AU1, AU2) of the emergency stop button (10A) and of the two cabling circuits (HM1, HM2) of the dead man contactor (10B) so as not to trigger the emergency stop,
- c) at the end of the predetermined length of time (t1), the safety controller (5) does not trigger an emergency stop of the robot arm (B) if and only if, on the one hand, only one of the two cabling circuits (AU1, AU2) of the emergency stop button (10A) is open and, on the other hand, only one of the two cabling circuits (HM1, HM2) of the dead man contactor (10B) is open.

2. The method according to claim 1, **characterized in that** during step b), an operator connects a stopper (7) to the robot controller (C) in place of the cord (1), the stopper (7) closing only one of the two cabling circuits (AU1, AU2) of the emergency stop button (10A) and closing only one of the two cabling circuits (HM1, HM2) of the dead man contactor (10B).

3. The method according to claim 2, **characterized in** it further comprises subsequent steps, in which:
- a') an operator removes the stopper (7),
- b) during a second predetermined length of time (t2) started upon removal of the stopper (7), the safety controller (5) suspends the control of the two electrical cabling circuits (AU1, AU2) of the emergency stop button (10A) and of the two cabling circuits (HM1, HM2) of the dead man contactor (10B) so as not to trigger the emergency stop,
- c') at the end of the second predetermined length of time (t2), the safety controller (5) triggers the emergency stop if the two cabling circuits (AU1, AU2) of the emergency stop button (10A) are open and if the two cabling circuits (HM1, HM2) of the dead man contactor (10B) are open.

4. The method according to one of the preceding claims, **characterized in that** during step a), the disconnection request is done using the manual control unit (10).

5. The method according to claim 4, **characterized in that** the disconnection request order is received by an interface, in particular a touchscreen (101) of the manual control unit (10).

6. The method according to one of claims 1 to 2, **characterized in that** during step a), the disconnection request is done using a disconnection contactor (6) connected to the safety controller (5).

7. A multi-axis robot (R) arranged for implementing a method according to one of the preceding claims, the robot including a robot controller (C) and a manual control unit (10) that includes:
- an emergency stop button (10A),
- a dead man contactor (10B),
- a connecting cord (1) for connecting the manual control unit (10) to the robot controller (C), the cord (1) including:
- an input power line (eAU1, eAU2) and output power line (sAU1, sAU2) for each of the two cabling circuits (AU1, AU2) of the emergency stop button (10A), and
- an input power line (eHM1, eHM2) and output power line (sHM1, sHM2) for each of the two cabling circuits (HM1, HM2) of the dead man contactor (10B),
the robot controller (C) including:
- a central processing unit (2) able to execute programs for commanding the robot arm (B), and
- a safety controller (5) able to test the two cabling circuits (AU1, AU2) of the emergency stop button and the two cabling circuits (HM1, HM2) of the dead man contactor (10B), and trigger an emergency stop of the robot arm (B), and arranged to carry out the third step c),
the robot further comprising a stopper (7) able, when it is connected to the robot controller (C) in place of the cord (1), to close only one of the two cabling circuits (AU1, AU2) of the emergency stop button (10A) and only one of the two cabling circuits (HM1, HM2) of the dead man contactor (10B).

8. The multi-axis robot (R) according to claim 7, **characterized in that** the manual control unit (10) comprises an interface, in particular a touchscreen (101), able to receive a disconnection request order.

9. The multi-axis robot (R) according to claim 7 or 8, **characterized in that** the robot controller (C) comprises a disconnection contactor (6) connected to the safety controller (5) and able to receive a disconnection request order.
